# EUROPÄISCHE PATENTANMELDUNG

(11) **EP 2 634 904 A2**
(43) Veröffentlichungstag der Anmeldung: **04.09.2013**
(21) Anmeldenummer: 13000722.2
(22) Anmeldetag: 12.02.2013
(51) Int. Cl.: H02M 3/335, H02M 3/338

(54) **AC/DC, DC/DC LED Treiber mit hohem Leistungsfaktor**

(30) Priorität: 01.03.2012 DE 102012003952
(71) Anmelder: Oezkan, Akdogan, Antalya (TR)
(72) Erfinder: Oezkan, Akdogan, Antalya (TR)
(74) Vertreter: Wagner, Jutta

(57) **Zusammenfassung**

Die Erfindung betrifft einen Spannungswandler mit einer Brückenschaltung (52), die mindestens zwei im Gegentakt gesteuerte Halbleiterschalter (10, 11), einen Lasttransformator (14) und einen Steuertransformator (15) umfasst, dessen Primärwicklung (15.1) in Reihe mit der Primärwicklung (14.1) des Lasttransformators (14) geschaltet ist und der mehrere Sekundärwicklungen (15.2, 15.3) aufweist, die jeweils mit einem Steuereingang der Halbleiterschalter (10, 11) verbunden sind. An einer Sekundärwicklung (14.2) des Lasttransformators (14) ist ein aktiver Gleichrichter (50) angeschlossen, der zwei erste Halbleiterschalter (31, 32) umfasst, die jeweils mit einem ersten beziehungsweise zweiten Ende der Sekundärwicklung (14.2) verbunden sind, und der ferner zwei zweite Halbleiterschalter (42, 45) umfasst, die die zum Ein- und Ausschalten der ersten Halbleiterschalter (31, 32) dienen. Außerdem ist ein Hauptanschluss eines ersten der beiden ersten Halbleiterschalter (31, 32) über eine erste Drossel (39), und ein Hauptanschluss des zweiten der beiden ersten Halbleiterschalter (31, 32) über eine zweite Drossel (39a)mit einem gemeinsamen Gleichspannungsknoten verbunden.

## Beschreibung

Die Erfindung betrifft einen AC/DC, DC/DC Wandler mit einer Brückenschaltung mit mindestens zwei im Gegentakt gesteuerten Halbleiterschaltern, einem Lasttransformator und einem Steuertransformator, der eine Primärwicklung und mehrere Sekundärwicklungen umfasst, die jeweils mit einem Steuereingang der Halbleiterschalter verbunden sind, so dass diese abwechselnd ein- und ausgeschaltet werden.

Derartige Spannungswandler werden beispielsweise in Netzteilen für verschiedenste elektrische Verbraucher, wie z. B. Monitore, Elektrogeräte oder Leuchten, eingesetzt und dienen dazu eine Netzspannung von typischerweise 110 V oder 230 V in eine Gleichspannung von z.B. 12 V oder 9V zu wandeln. Eine andere Anwendung ist beispielsweise die Spannungsversorgung von LED-Modulen.

Aus der DE 26 24 566 C2 ist beispielsweise ein Spannungswandler mit einer selbstschwingenden Brückenschaltung bekannt. Die selbstschwingende Brückenschaltung ist dabei als so genannte Halbbrücke ausgeführt, bei der in einem Brückenzweig zwei Halbleiterschalter (Transistoren) angeordnet sind, die im Gegentakt angesteuert werden. Ein weiterer, nicht geschalteter Brückenzweig enthält eine Reihenschaltung aus zwei Kondensatoren mit jeweils parallel geschalteten Dioden. Die Erfindung ist jedoch auch für selbstschwingende Voll-Brückenschaltungen mit zwei geschalteten Zweigen anwendbar.

Ein anderer AC/DC-Spannungswandler mit einer selbstschwingenden Brückenschaltung ist aus der DE 198 01 848 A1 bekannt. Bei diesem Spannungswandler umfasst der Steuertransformator eine weitere Wicklung, die an eine Sekundärwicklung des Lasttransformators angeschlossen ist. Beide Brückenzweige weisen außerdem jeweils zwei im Gegentakt gesteuerte Halbleiterschalter auf, die mittels je eines Steuertransformators ein- und ausgeschaltet werden.

Bei den aus dem Stand der Technik bekannten Spannungswandlern besteht die Problematik, dass sie eingangsseitig eine Phasenverschiebung zwischen der Netzspannung und dem Netzstrom verursachen, da sie einen relativ kleinen Leistungsfaktor haben, also eine betragsmäßig relativ kleine Wirkleistung im Vergleich zur Scheinleistung. Bekannte Netzteile oder Treiber benötigen daher oftmals eine spezielle Schaltung zur Korrektur des Leistungsfaktors, was sie relativ teuer macht.

Es ist daher eine Aufgabe der vorliegenden Erfindung, einen Spannungswandler zu schaffen, der einen höheren Leistungsfaktor aufweist, ohne hierzu aufwendige Korrekturschaltungen vorzusehen.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird ein Spannungswandler mit einer schwingenden Brückenschaltung vorgeschlagen, die mindestens zwei im Gegentakt gesteuerte Halbleiterschalter sowie einen Lasttransformator und einen Steuertransformator umfasst. Der Steuertransformator hat dabei eine Primärwicklung und mehrere Sekundärwicklungen, die jeweils mit einem Steuereingang der Halbleiterschalter verbunden sind. An einer Sekundärwicklung des Lasttransformators ist gemäß Erfindung ein aktiver Gleichrichter angeschlossen, der wenigstens zwei erste Halbleiterschalter umfasst, die jeweils an einem ersten bzw. einem zweiten Ende der Sekundärwicklung angeschlossen sind, und der ferner wenigstens zwei zweite Halbleiterschalter umfasst, die jeweils zum Ein- und Ausschalten der ersten Halbleiterschalter dienen. Der aktive Gleichrichter ist ferner derart ausgelegt, dass ein Hauptanschluss eines ersten der beiden ersten Halbleiterschalter über eine erste Drossel, und ein Hauptanschluss des zweiten der beiden ersten Halbleiterschalter über eine zweite Drossel mit einem gemeinsamen Gleichspannungsknoten verbunden ist. Dadurch, dass jedem ersten Halbleiterschalter eine eigene Drossel zugeordnet ist, lässt sich der Leistungsfaktor stark erhöhen, so dass problemlos Werte von 0,9 und darüber erreicht werden können. Außerdem wird am Ausgang eines solchen aktiven Gleichrichters ein Gleichstrom mit einer sehr geringen Welligkeit bereitgestellt.

Die Eingangsspannung des erfindungsgemäßen Spannungswandler kann entweder eine Gleichspannung (DC) oder einer Wechselspannung (AC) sein. Die Ausgangsspannung ist eine Gleichspannung (DC).

Der Steueranschluss der beiden ersten Halbleiterschalter ist vorzugsweise über einen optionalen Widerstand und die jeweils zugehörige, vorstehend genannte Drossel mit dem gemeinsamen Knoten verbunden.

Gemäß einer Ausführungsform der Erfindung ist jeweils zwischen dem Hauptanschluss der beiden ersten Halbleiterschalter und der zugehörigen Drossel eine Freilaufdiode angeschlossen. Die Freilaufdioden können z. B. jeweils zwischen einen versorgungsseitigen Knoten (d.h. einen Knoten, der zwischen einem Hauptanschluss eines der ersten Halbleiterschalter und der zugehörigen Drossel angeordnet ist) und einen gemeinsamen masseseitigen Knoten, wie z. B. direkt auf Masse, geschaltet sein.

Ausgangsseitig der Drosseln ist vorzugsweise wenigstens ein Kondensator angeschlossen. Der Kondensator kann z. B. gegen denselben Knoten geschaltet sein, an dem auch die beiden Freilaufdioden angeschlossen sind.

Die zweiten Halbleiterschalter sind vorzugsweise zwischen einem Steueranschluss der ersten Halbleiterschalter und einer Mittelanzapfung der Sekundärwicklung angeschlossen.

Gemäß einer bevorzugten Ausführungsform der Erfindung sind die ersten Halbleiterschalter des aktiven Gleichrichters als MOS-Transistoren realisiert. Andere bekannte Transistor- oder Schaltertypen sind jedoch gleichermaßen einsetzbar.

Die zweiten Halbleiterschalter des aktiven Gleichrichters, die zum Ein- und Ausschalten der ersten Halbleiterschalter dienen, sind vorzugsweise als npn- oder pnp-Transistoren realisiert. Auch hier können ohne weiteres andere bekannte Transistor- oder Schaltertypen verwendet werden.

Wenn in diesem Dokument angegeben ist, dass ein Bauteil mit einem anderen elektronischen Bauteil "verbunden" oder daran "angeschlossen" ist, so ist darunter zu verstehen, dass das Bauteil entweder direkt oder ggf. über wenigstens ein weiteres, zwischengeschaltetes Bauteil mit dem anderen elektronischen Bauteil verbunden bzw. daran angeschlossen ist. Ein möglicherweise zwischengeschaltetes elektronisches Bauteil kann ein kapazitives, induktives oder ohmsches Bauteil sein. Der Fachmann wird das zwischengeschaltete Bauteil in jedem Fall derart auswählen, dass die erfindungsgemäß beabsichtigte Funktion der Schaltung erreicht wird.

Bei dem erfindungsgemäßen aktiven Gleichrichter ist vorzugsweise jeweils ein zweiter Hauptanschluss der ersten Halbleiterschalter mit dem ersten bzw. zweiten Ende der Sekundärwicklung des Lasttransformators verbunden.

Die zweiten Halbleiterschalter sind vorzugsweise derart angeordnet, dass der Steueranschluss der ersten Halbleiterschalter wahlweise gegen ein Versorgungspotential oder ein Referenzpotential geschaltet werden kann. Vorzugsweise ist ein erster Hauptanschluss der zweiten Halbleiterschalter jeweils mit einem Steueranschluss der ersten Halbleiterschalter, und ein zweiter Hauptanschluss der zweiten Halbleiterschalter mit einer Mittelanzapfung der Sekundärwicklung des Lasttransformators verbunden.

Unter einem Hauptanschluss eines Halbleiterschalters ist hier ein Anschluss zu verstehen, der in dem zu schaltenden Hauptstromkreis angeordnet ist. Bei einem npn-Transistor ist dies beispielsweise der Kollektor oder der Emitter. Der Steueranschluss ist dagegen derjenige Anschluss, der zum Durchführen eines Schaltvorgangs angesteuert werden muss. Bei einem npn-Transistor ist dies beispielsweise die Basis.

Der Steueranschluss der zweiten Halbleiterschalter ist vorzugsweise jeweils mit einem Ende der Sekundärwicklung des Lasttransformators verbunden. Die zweiten Halbleiterschalter werden somit im Gegentakt angesteuert.

Gemäß einer alternativen Ausführungsform der Erfindung kann der Steueranschluss der zweiten Halbleiterschalter jeweils auch mit einem Pulsgenerator verbunden sein, der z. B. ein PWM-Signal erzeugt. Jeder zweite Halbleiterschalter wird in diesem Fall periodisch ein- und ausgeschaltet. Die Ausschalt-Zeitdauer für jeden zweiten Halbleiterschalter sollte dabei bei wenigstens 50% der Periodendauer liegen.

Die Brückenschaltung kann wahlweise als selbstschwingende Brücke oder als fremderregte Brücke ausgelegt sein. Im Falle einer selbstschwingenden Brückenschaltung sind die Primärwicklung des Steuertransformators und die Primärwicklung des Lasttransformators vorzugsweise in der Brückendiagonale in Reihe geschaltet.

Im Falle einer fremderregten Brückenschaltung kann an der Primärwicklung des Steuertransformators ein Pulsgenerator angeschlossen sein, der z. B. Rechteckpulse erzeugt. Die Einschalt-Zeitdauer der Rechteckpulse kann z. B. zwischen 30% und 70% der Periodendauer betragen.

Bei vielen bekannten Spannungswandlern mit selbstschwingender Brückenschaltung ist es problematisch, dass sie, um schwingen zu können, eine Last benötigen, die mindestens etwa 30% der Nennlast beträgt. Bei einer geringeren Belastung oder im Leerlauf (ohne Belastung) würde die Eigenschwingung der Brücke aufhören und der Spannungswandler somit ausfallen. Um die Funktion eines erfindungsgemäßen Spannungswandlers auch bei geringer Belastung bzw. im Leerlauf zu gewährleisten, ist vorzugsweise ein Rückkoppelkreis vorgesehen, der eine weitere Sekundärwicklung des Steuertransformators und eine zweite Sekundärwicklung des Lasttransformators umfasst, die seriell miteinander verbunden sind. Die zweite Sekundärwicklung des Lasttransformators induziert dabei in den am Eingang der Halbleiterschalter angeordneten Sekundärwicklungen des Steuertransformators eine Spannung, die die Eigenschwingung der Brücke aufrecht erhält.

Im Rückkoppelkreis ist vorzugsweise auch ein Widerstand vorgesehen, der in Serie mit den Sekundärwicklungen geschaltet ist. Diese Maßnahme dient insbesondere zur Begrenzung der Wirksamkeit der weiteren Wicklung des Steuertransformators, so dass bei höheren Belastungen die Anregung wieder durch den Steuertransformator erfolgt. Der Widerstand bedingt zwar eine zusätzliche Verlustleistung, die jedoch bei vielen Anwendungsfällen vernachlässigbar ist.

Gemäß einer bevorzugten Ausführungsform der Erfindung ist im Rückkoppelkreis ein Kondensator angeschlossen, der seriell zu den Sekundärwicklungen von Steuertransformator und Lasttransformator angeordnet ist. Der im Rückkoppelkreis angeordnete Kondensator dient insbesondere zur Kompensation einer Phasenverschiebung zwischen der Eingangsspannung und dem Eingangsstrom des Spannungswandlers. Der erfindungsgemäße Spannungswandler hat somit eine geringere Rückwirkung in das allgemeine Stromnetz und somit eine verbesserte elektromagnetische Verträglichkeit.

Gemäß einer bevorzugten Ausführungsform der Erfindung ist der Kondensator derart ausgelegt, dass der Cosinus der Phasenverschiebung zwischen Strom und Spannung am Eingang des Spannungswandlers größer ist als 0,9, insbesondere größer als 0,95 und insbesondere etwa 0,99 beträgt.

Eine weitere Ausführungsform der Erfindung ist derart ausgebildet, dass der Spannungswandler eine besonders hohe Kurzschlussfestigkeit aufweist. Zu diesem Zweck ist vorzugsweise ein Stromsensor zur Erfassung eines Kurzschlusses und/oder einer Überlastung vorgesehen. Ferner ist vorzugsweise ein Halbleiterschalter vorgesehen, der parallel zu einer der Sekundärwicklungen des Steuertransformators geschaltet ist und die Sekundärwicklung kurzschließen kann, wenn der Halbleiterschalter entsprechend angesteuert wird. Ein Steueranschluss des Halbleiterschalters kann beispielsweise mit dem Stromsensor verbunden sein. Sobald die Sekundärwicklung kurzgeschlossen ist, hört die Brückenschaltung auf zu schwingen, so dass die daran angeschlossene elektrische Last geschützt wird.

Eine weitere Verbesserung des Spannungswandlers kann erreicht werden, wenn die am Eingang der im Gegentakt schwingenden Halbleiterschalter angeordneten Sekundärwicklungen des Steuertransformators von den Eingängen der Halbleiterschalter galvanisch getrennt sind. Hierzu kann beispielsweise zwischen einem Ende der Sekundärwicklungen, das mit den Steuereingängen der Halbleiterschalter verbunden ist, und den Steuereingängen der Halbleiterschalter jeweils ein Kondensator vorgesehen sein.

Gemäß einer bevorzugten Ausführungsform der Erfindung ist wenigstens ein Anschluss der Sekundärwicklungen des Steuertransformators jeweils über wenigstens einen Kondensator mit dem zugehörigen Steueranschluss der Halbleiterschalter verbunden.

Der erfindungsgemäße Spannungswandler ist vorzugsweise dimmbar. Zu diesem Zweck kann beispielsweise am Wechselspannungseingang des Wandlers eine Dimmeinrichtung vorgesehen sein. Die Dimmeinrichtung kann z. B. einen Halbleiterschalter, wie z.B. einen Triac umfassen.

Die Erfindung wird nachstehend anhand der beigefügten Zeichnungen beispielhaft näher erläutert. Es zeigen:
Fig. 1A einen AC/DC-Wandler, der auch als DC/DC-Wandler eingesetzt werden kann, mit einer selbstschwingenden Brückenschaltung und einem am Ausgang vorgesehenen getakteten Aufwärtswandler; und
Fig. 1B einen AC/DC-Wandler, der auch als DC/DC-Wandler eingesetzt werden kann, mit einer selbstschwingenden Brückenschaltung und einem am Ausgang vorgesehenen getakteten Abwärtswandler;
Fig. 2 einen AC/DC-Wandler, der auch als DC/DC-Wandler eingesetzt werden kann, mit einer fremderregten Brückenschaltung und einem am Ausgang vorgesehenen getakteten Aufwärtswandler;
Fig. 3 einen AC/DC-Wandler, der auch als DC/DC-Wandler eingesetzt werden kann, mit einer fremderregten Brückenschaltung, ohne zusätzlichen getakteten Spannungswandler;
Fig.4 einen AC/DC-Wandler, der auch als DC/DC-Wandler eingesetzt werden kann, mit einer selbstschwingenden Brückenschaltung und einem aktiven Gleichrichter gemäß einer zweiten Ausführungsform der Erfindung;

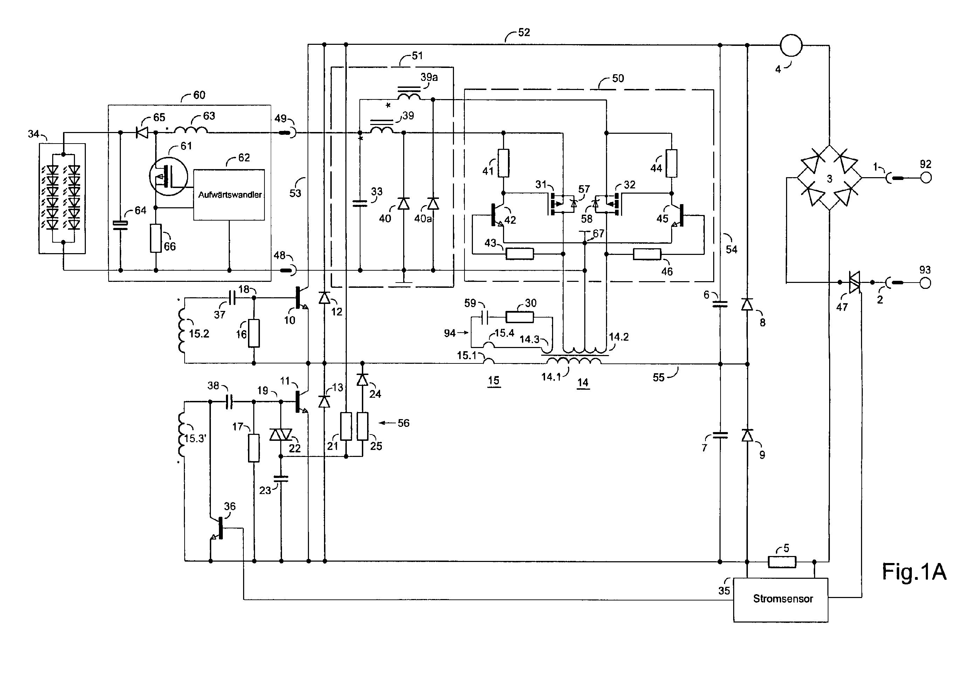

Figur 1A zeigt einen Spannungswandler, der eine an den Eingangsklemmen 92, 93 anliegende Wechselspannung, wie beispielsweise eine Netzspannung von 230V, in eine an den Ausgangsklemmen 48, 49 anliegende Gleichspannung wandelt. Die Ausgangsspannung kann z. B. 6 V oder 9 V betragen. Der in Figur 1A dargestellte Spannungswandler wird hier zum Treiben eines LED-Moduls 34 verwendet, das am Ausgang des Spannungswandlers angeschlossen ist; er kann aber auch zur Versorgung beliebiger anderer Verbraucher eingesetzt werden.

Die an den Eingangsklemmen 92, 93 zugeführte Wechselspannung wird zunächst mit Hilfe eines Graetz-Gleichrichters 3 mit mehreren Dioden gleichgerichtet. Die gelichgerichtete Spannung wird dann und über eine Sicherung 4 und einen Strommesswiderstand 5 einer selbstschwingenden Brückenschaltung 52 zugeführt.

Am Eingang 1,2 des Spannungswandlers ist ferner eine Dimmeinrichtung 95 vorgesehen, die einen Triac 90 und ein Potenziometer 91 umfasst. Als Überlastschutz ist ferner ein Halbleiterschalter 47, im vorliegenden Beispiel ein Triac, vorgesehen, der mit einem Stromsensor 35 verbunden ist. Bei einem Kurzschluss oder im Überlastfall kann der Spannungswandler somit vom Netz getrennt werden.

Der selbstschwingende Brückenschaltung 52 des Spannungswandlers umfasst in bekannter Weise zwei Hauptäste 53 bzw. 54 und eine Brückendiagonale 55. Im links dargestellten Hauptast 53 sind zwei im Gegentakt gesteuerte Halbleiterschalter 10, 11 in Reihe geschaltet. Der Halbleiterschalter 10 befindet sich dabei auf der Nordseite und der Halbleiterschalter 11 auf der Südseite der Brücke 52.

Der in Figur 1A dargestellte Spannungswandler umfasst ferner einen Lasttransformator 14 und einen Steuertransformator 15, die jeweils eine Primärwicklung 14.1 bzw. 15.1 aufweisen, die in der Brückendiagonale 55 in Reihe geschaltet sind. Der Steuertransformator 15 umfasst zwei Sekundärwicklungen 15.2, 15.3, die jeweils einem der Halbleiterschalter 10, 11 zugeordnet sind. Im dargestellten Beispiel sind die Sekundärwicklungen 15.2, 15.3 jeweils mit einem Steuereingang der im Gegentakt geschalteten Halbleiterschalter 10, 11 verbunden. Wie zu erkennen ist, sind die Sekundärwicklungen 15.2 und 15.3 gegensinnig gewickelt. Während des Betriebs des Spannungswandlers wird daher in den Sekundärwicklungen 15.2 und 15.3 eine Spannung induziert, die die Halbleiterschalter 10 und 11 im Gegentakt öffnet und schließt.

Parallel zu den im Gegentakt geschalteten Halbleiterschalter 10, 11 ist jeweils eine Diode 12 bzw. 13 angeschlossen.

Im rechts dargestellten Hauptzweig 54 der Brückenschaltung 52 sind zwei in Reihe geschaltete Kondensatoren 6, 7 vorgesehen. Der Kondensator 6 ist dabei auf der Nordseite und der Kondensator 7 auf der Südseite der Brücke angeordnet. Parallel zu den einzelnen Kondensatoren 6, 7 ist jeweils wiederum eine Diode 8 bzw. 9 angeschlossen.

Auf der Sekundärseite des Lasttransformators 14 ist ein aktiver Gleichrichter 50 angeschlossen, auf den nachstehend noch genauer Bezug genommen wird. Am Ausgang des aktiven Gleichrichters 50 ist ferner eine Filterschaltung 51 vorgesehen, die zum Glätten der Ausgangsspannung dient.

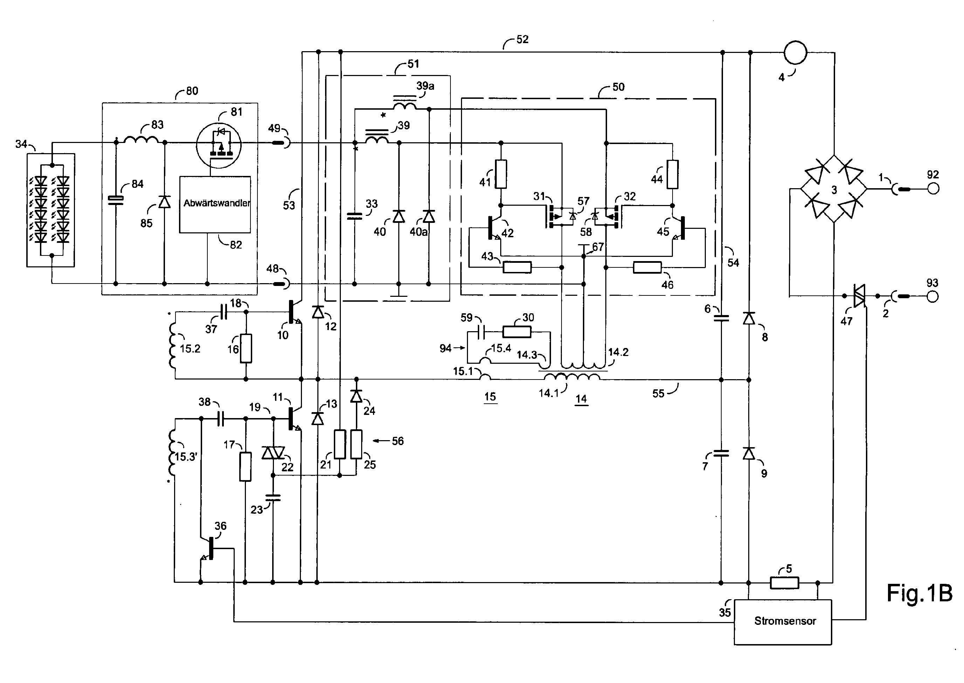

Beim Einschalten des Spannungswandlers von Figur 1 wird zunächst der Transistor 11 mit Hilfe einer Anlaufschaltung 56 durchgeschaltet. Die Anlaufschaltung 56 umfasst dabei die Elemente 21 bis 25. Im vorliegenden Beispiel sind dies ein Widerstand 21 und eine Reihenschaltung aus einem Diac 22 und einem Kondensator 23, wobei die Reihenschaltung 22, 23 zwischen einem Steueranschluss des Halbleiterschalters 11 und einem masseseitigen Bezugspotential angeordnet ist. Der Widerstand 21 befindet sich zwischen einem Knoten, an dem eine gleichgerichtete Versorgungsspannung anliegt, und einem Mittenknoten der vorstehend genannten Reihenschaltung 22,23. Die Anschwingschaltung 56 umfasst ferner eine Reihenschaltung aus einem Widerstand 25 und einer Diode 24, die zwischen der Brückendiagonale 55 und dem vorstehend genannten Mittenknoten angeschlossen ist.

Der Steuereingang der Halbleiterschalter 10, 11 ist darüber hinaus über einen Widerstand 16 bzw. 17 mit dem jeweiligen Hauptanschluss (hier dem Emitter-Anschluss) verbunden.

Nach dem Einschalten des Spannungswandlers fließt ein relativ hoher Strom durch die Primärwicklungen 15.1 und 14.1 des Steuertransformators 15 bzw. Lasttransformators 14. Dieser Strom induziert in den Sekundärwicklungen 15.2 bzw. 15.3 eine Spannung ,die den Halbleiterschalter 11 in den leitenden Zustand schaltet, während der Halbleiterschalter 10 noch sperrt. Durch das Leitendwerden des Halbleiterschalters 11 fließt in der Brückendiagonale ein Strom, der in den Sekundärwicklungen 15.2 und 15.3 des Steuertransformators eine Spannung induziert, die den Halbleiterschalter 10 durchschaltet und den Halbleiterschalter 11 sperrt. Nach dem Anschwingen entwickelt sich dann eine Eigenschwingung der Brückenschaltung 52, die sich selbsttätig aufrecht erhält.

Um die Funktion des Spannungswandlers auch bei geringen Lasten am Ausgang 48, 49 zu gewährleisten, ist ein Rückkoppelkreis 94 vorgesehen. Dadurch kann der Spannungswandler auch für elektrische Lasten verwendet werden, deren Nennleistung kleiner ist als beispielsweise 30% der Nennleistung des Spannungswandlers. Außerdem ist es möglich, den Spannungswandler im Leerlauf (also ganz ohne Last) am Schwingen zu halten.

Der Rückkoppelkreis 94 umfasst hier eine weitere Sekundärwicklung 15.4 des Steuertransformators 15 und ein zweite Sekundärwicklung 14.3 des Lasttransformators 14, die seriell miteinander verschaltet sind. Außerdem ist im Rückkoppelkreis 94 ein Widerstand 30 vorgesehen, der mit den Sekundärwicklungen 14.3. bzw. 15.4 in Reihe geschaltet ist. Der Widerstand 30 dient insbesondere dazu, die Wirkung der Rückkoppelung bei größeren elektrischen Lasten nicht zu groß werden zu lassen. Der Widerstand 30 ist vorzugsweise derart bemessen sind, dass die zum Schwingen benötigte Rückkopplung bei geringer Last im Wesentlichen über die weitere Sekundärwicklung 15.4 und bei großer Last über die Primärwicklung 15.1 erfolgt. Dabei hat es sich für die meisten Anwendungsfälle als vorteilhaft herausgestellt, wenn ein Übergang der Rückkopplung von der weiteren Sekundärwicklung 15.4 auf die Primärwicklung 15.1 bei Werten zwischen 10% und 30% der Nennlast erfolgt.

Bei der in Figur 1A dargestellten Ausführungsform ist neben den genannten Elementen 14.3, 15.4 und 30 außerdem ein Kondensator 59 in Reihe geschaltet. Dieser Kondensator 59 dient im Wesentlichen dazu, die Phasenverschiebung zwischen dem am Eingang 92, 93 anliegenden Wechselstrom und der am Eingang 92, 93 anliegenden Wechselspannung zu kompensieren. Vorzugsweise ist der Kondensator 59 derart ausgelegt, dass der Cosinus der Phasenverschiebung zwischen Strom und Spannung größer ist als 0,9, insbesondere größer als 0,95 und am besten etwa bei 0,99 liegt. Während des Betriebs wird mittels des Rückkoppelkreises 94 in den Sekundärwicklungen 15.2 und 15.3 eine Spannung induziert, die die Eigenschwingung der Brückenschaltung 52 aufrecht erhält.

Durch die verhältnismäßig geringe Netzrückwirkung können eingangsseitige Filter sowohl billiger als auch kleiner ausgeführt werden. Schließlich kommt ein solcher Spannungswandler durch seine Kompaktheit und die geringe Netzrückwirkung den mit der Zeit strenger werdenden Vorschriften bezüglich der elektromagnetischen Verträglichkeit entgegen.

Bei der in Figur 1A dargestellten Schaltung sind die Steuereingänge der Halbleiterschalter 10 und 11 von den Sekundärwicklungen 15.2 bzw. 15.3 galvanisch entkoppelt. Hierzu ist jeweils zwischen einem Ende der Sekundärwicklungen 15.2, 15.3 und den Steuereingängen der Halbleiterschalter 10, 11 ein Kondensator 37 bzw. 38 angeordnet. Dadurch werden die Steuereingänge der Halbleiterschalter 10, 11 von den Sekundärwicklungen 15.2 bzw. 15.3 galvanisch entkoppelt.

Der an der Sekundärwicklung 14.2. des Lasttransformators 14 angeschlossene aktive Gleichrichter 50 umfasst zwei erste Halbleiterschalter 31, 32, im vorliegenende Fall MOS-Transistoren, die jeweils mit einem Hauptanschluss (Drain) an einem ersten bzw. zweiten Ende der Sekundärwicklung 14.2 angeschlossen sind. Jeder der ersten Halbleiterschalter 31, 32 wird von einem zweiten Halbleiterschalter 42 bzw. 45 angesteuert. Diese Halbleiterschalter 31, 32 sind zwischen einem Steueranschluss der ersten Halbleiterschalter 31, 32 und einer Mittelanzapfung der Sekundärwicklung 14.2 angeordnet. Die Mittelanzapfung der Sekundärwicklung 14.2 liegt vorzugsweise auf Masse. Der Steueranschluss der beiden zweiten Halbleiterschalter 42 und 45 ist jeweils über einen optionalen Widerstand 43 bzw. 46 mit einem ersten bzw. zweiten Ende der Sekundärwicklung 14.2 verbunden.

Wie vorstehend erwähnt, ist ein Hauptanschluss der ersten Halbeleiterschalter 31, 32 jeweils mit einem ersten bzw. zweiten Ende der Sekundärwicklung 14.2 verbunden. Der jeweils andere Hauptanschluss der ersten Halbleiterschalter 31, 32 ist jeweils über eine Drossel 39, 39a mit einem gemeinsamen Gleichspannungsknoten verbunden, an dem eine gleichgerichtete Spannung bereitgestellt wird. Der Steueranschluss der beiden ersten Halbleiterschalter 31, 32 ist über einen optionalen Widerstand 41 bzw. 44 und die jeweils zugehörige Drossel 39 bzw. 39a ebenfalls mit dem gemeinsamen Gleichspannungsknoten verbunden.

Während des Betriebes werden die ersten Halbleiterschalter 31, 32 im Gegentakt ein- und ausgeschaltet. Die am Ausgang des aktiven Gleichrichters 50 bereitgestellte Gleichspannung wird dann nochmals mittels einer Filterschaltung 51 geglättet. Die Filterschaltung 51 umfasst die bereits genannten Induktivitäten 39, 39a und einen parallel zum Ausgang geschalteten Glättungskondensator 33. Außerdem ist jeweils zwischen dem Hauptanschluss der beiden ersten Halbleiterschalter 31, 32 und der zugehörigen Drossel 39 bzw. 39a eine Freilaufdiode 40 bzw. 40a angeschlossen. Jedem ersten Halbleiterschalter 31, 32 ist somit im Prinzip eine eigene LC-Schaltung (mit separaten Drosseln 39,39a und einem gemeinsam genutzten Kondensator 33) nachgeschaltet, die den Leistungsfaktor wesentlich verbessert.

Die ersten Halbleiterschalter 31, 32 sind hier als MOS-Transistoren realisiert. Die zweiten Halbleiterschalter 42, 45 sind als npn-Transistoren realisiert. Die anderen Halbleiterschalter 10, 11 und 36 sind ebenfalls npn-Transistoren.

Zur Realisierung einer Kurzschlussfestigkeit des Spannungswandlers ist ein Stromsensor 35 vorgesehen, der mit einem Steueranschluss eines Halbleiterschalters 36 verbunden ist, der wiederum parallel zur Sekundärwicklung 15.3 des Steuertransformators 15 angeschlossen ist. Wenn der Spannungsabfall über einem Strommesswiderstand 5 einen vorgegebenen Wert überschreitet, wird der Halbleiterschalter 36 angesteuert und schließt die Sekundärwicklung 15.3. kurz. Dadurch wird die Eigenschwingung der Brückenschaltung unterbrochen und das Netzteil ausgeschaltet. Die am Ausgang 48, 49 angeschlossene Last kann somit vor Überspannung geschützt werden.

An den Ausgangsklemmen 48, 49 ist ferner ein Aufwärtswandler (Stepup-Wandler) 60 vorgesehen, mittels dessen die gleichgerichtete Ausgangsspannung erhöht werden kann. Der Aufwärtswandler 60 ist nach dem Prinzip eines aus dem Stand der Technik bekannten Wandlers mit geschalteter Kapazität aufgebaut und umfasst eine parallel zum Ausgang angeordnete Kapazität 64, eine in der versorgungsseitigen Hauptleitung in Reihe geschaltete Induktivität 63 und einen Halbleiterschalter 61, mittels dessen der ausgangsseitige Knoten der Induktivität 63 mit einem vorgegebenen Takt gegen das Referenzpotential (z.B. Masse) geschaltet werden kann. Der Halbleiterschalter 61 ist mit einer Steuereinheit 62 verbunden, die den Halbleiterschalter 61, wie z.B. einen MOS-Transistor, entsprechend ansteuert. Am referenzspannungsseitigen Hauptanschluss des Halbleiterschalters 61 ist wiederum ein Widerstand 66 vorgesehen. Darüber hinaus ist eine Diode 65 mit der Induktivität 63 in Reihe geschaltet.

Figur 1B zeigt eine weitere Ausführungsform eines AC/DC-Wandlers mit einer selbstschwingenden Brückenschaltung, der im Wesentlichen identisch aufgebaut ist wie der Spannungswandler von Figur 1A. Gleiche Bauelemente sind daher mit gleichen Bezugszeichen bezeichnet. Im Unterschied zum Spannungswandler von Figur 1 umfasst diese Ausführungsform am Ausgang einen Abwärtswandler 80 (StepDown-Wandler). Der Abwärtswandler 80 ist wiederum nach dem Prinzip eines aus dem Stand der Technik bekannten Wandlers mit geschalteter Kapazität aufgebaut und umfasst eine parallel zur Last 34 geschaltete Kapazität 84, eine in der versorgungsseitigen Hauptleitung in Reihe geschaltete Induktivität 83 und einen Halbleiterschalter 81, mittels dessen der durch die Induktivität 83 fließende Strom ein- und ausgeschaltet werden kann. Der Halbleiterschalter 81, wie z.B. ein MOS-Transistor, wird von einer Steuereinheit 82 entsprechend angesteuert. Der Abwärtswandler 80 umfasst ferner eine Diode 85, die zwischen einen versorgungsseitigen Knoten der Induktivität 83 und das Referenzpotential in Sperrrichtung geschaltet ist.

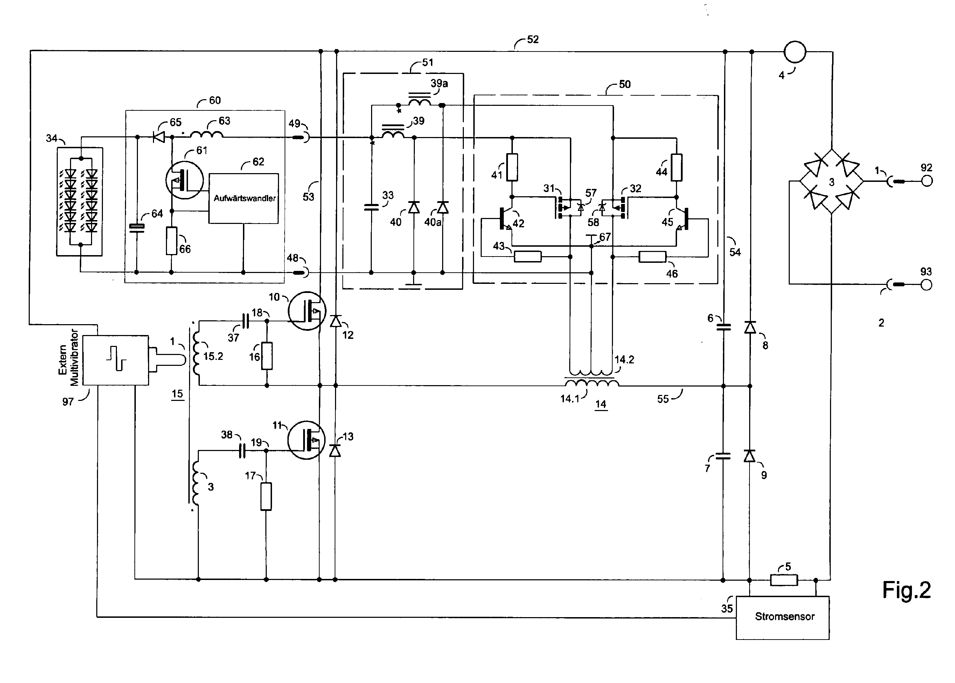

Figur 2 zeigt eine Ausführungsform eines AC/DC-Wandlers mit einer fremderregten Brückenschaltung. In diesem Fall ist die Primärwicklung 15.1 des Steuertransformators 15 am Ausgang eines Pulsgenerators 97 angeschlossen, der Rechteckpulse erzeugt, die dazu führen, dass die im linken Hauptast 53 der Brückenschaltung angeordneten Halbleiterschalter 10, 11 im Gegentakt ein- und ausgeschaltet werden. Die Einschalt-Zeitdauer beträgt in diesem Beispiel 50%, kann aber auch mehr oder weniger sein. Der Pulsgenerator 97 ist versorgungsseitig mit dem Graetz-Gleichrichter 3 verbunden und liegt masseseitig an einem gemeinsamen Knoten zusammen mit der Sekundärwicklung 15.3, einem Widerstand 17 und einem Hauptanschluss des Halbleiterschalters 11.

Am Ausgang des Spannungswandlers ist ein getakteter Aufwärtswandler 60 angeschlossen, der bereits beschrieben wurde.

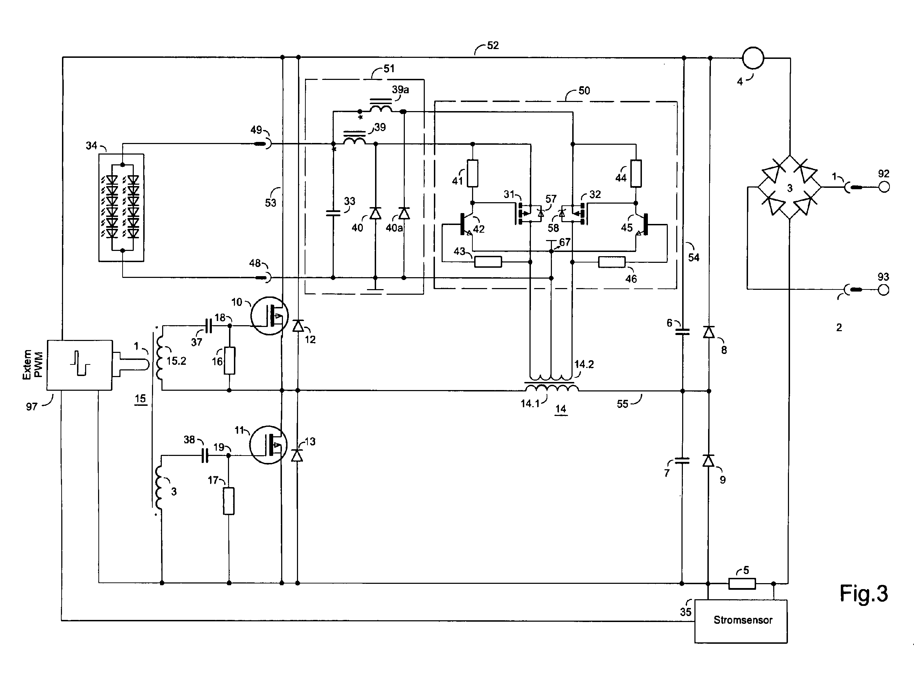

Figur 3 zeigt eine weitere Ausführungsform eines erfindungsgemäßen AC/DC-Wandlers mit einer fremderregten Brückenschaltung. Der Spannungswandler ist nahezu identisch aufgebaut wie derjenige von Fig. 2, umfasst aber an seinem Ausgang 58,59 keinen zusätzlichen getakteten Wandler. Um die Ausgangsspannung zu regeln kann der externe Impulsgenerator 97 Rechteckpulse mit unterschiedlichem Tastverhältnis erzeugen, die eine Einschalt-Zeitdauer zwischen z. B. 30% und 70% der Periodendauer aufweisen können.

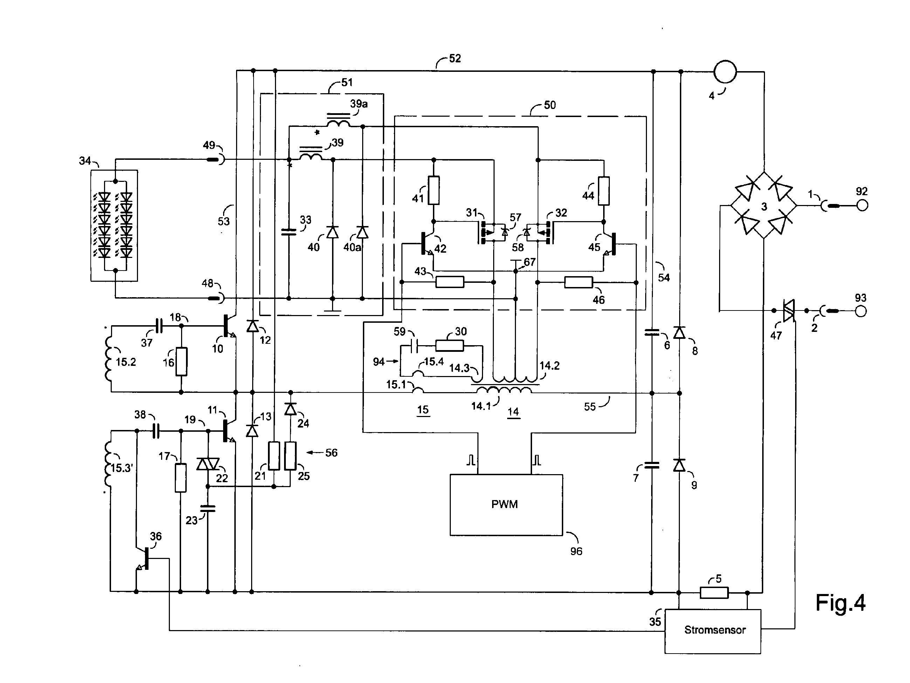

Figur 4 zeigt eine weitere Ausführungsform eines erfindungsgemäßen AC/DC-Wandlers mit einer selbstschwingenden Brückenschaltung entsprechend den Fig. 1A oder 1B. Im Unterschied zu diesen Ausführungsformen werden die zweiten Halbleiterschalter 42,45 aber nicht von der Sekundärwicklung 14.2 des Lasttransformators 14, sondern von einem externen Pulsgenerator 96 angesteuert. Die Steuereingänge der beiden zweiten Halbleiterschalter 42,45 sind hierzu mit dem Ausgang des Pulsgenerators 96 verbunden und werden mittels Rechteckpulsen periodisch ein- und ausgeschaltet. Die Ausschalt-Zeitdauer der einzelnen Pulse beträgt vorzugsweise wenigsten 50 % der Periodendauer.

Der Steueranschluss der beiden zweiten Halbleiterschalter 42,45 ist außerdem über jeweils eine Widerstand 43 bzw. 46 mit dem ersten bzw. zweiten Ende der Sekundärwicklung 14.2 verbunden.

Auch bei dieser Ausführungsform ist kein zusätzlicher Spannungswandler am Ausgang erforderlich, könnte aber theoretisch vorgesehen werden.

## Patentansprüche

1. Spannungswandler mit einer Brückenschaltung (52), die mindestens zwei im Gegentakt gesteuerte Halbleiterschalter (10, 11), einen Lasttransformator (14) und einen Steuertransformator (15) umfasst, der eine Primärwicklung (15.1) und mehrere Sekundärwicklungen (15.2, 15.3) aufweist, die jeweils mit einem Steuereingang der Halbleiterschalter (10, 11) verbunden sind, **dadurch gekennzeichnet, dass**
- an einer Sekundärwicklung (14.2) des Lasttransformators (14) ein aktiver Gleichrichter (50) angeschlossen ist, der zwei erste Halbleiterschalter (31, 32) umfasst, die jeweils mit einem ersten beziehungsweise zweiten Ende der Sekundärwicklung (14.2) verbunden sind,
- wobei der aktive Gleichrichter (50) ferner zwei zweite Halbleiterschalter (42, 45) umfasst, die zum Ein- und Ausschalten der ersten Halbleiterschalter (31, 32) dienen,
- und dass ein Hauptanschluss eines ersten der beiden ersten Halbleiterschalter (31, 32) über eine erste Drossel (39), und ein Hauptanschluss des zweiten der beiden ersten Halbleiterschalter (31, 32) über eine zweite Drossel (39a)mit einem gemeinsamen Gleichspannungsknoten verbunden ist.

2. Spannungswandler nach Anspruch 1, **dadurch gekennzeichnet, dass** der Steueranschluss der beiden ersten Halbleiterschalter (31, 32) jeweils über einen Widerstand (41,44) und die erste (39) beziehungsweise zweite Drossel (39a) mit dem gemeinsamen Gleichspannungsknoten verbunden ist.

3. Spannungswandler nach Anspruch 1 oder 2, **dadurch gekennzeichnet, dass** jeweils zwischen dem Hauptanschluss der beiden ersten Halbleiterschalter (31, 32) und der zugehörigen Drossel (39, 39a) eine Freilaufdiode (40,40a) angeschlossen ist.

4. Spannungswandler nach einem der vorhergehenden Ansprüche, **dadurch gekennzeichnet, dass** ausgangsseitig der Drosseln (39,39a) wenigstens ein Kondensator (33) angeschlossen ist.

5. Spannungswandler nach einem der vorhergehenden Ansprüche, **dadurch gekennzeichnet, dass** die zweiten Halbleiterschalter (42, 45) jeweils zwischen einem Steueranschluss der ersten Halbleiterschalter (31, 32) und einer Mittelanzapfung der Sekundärwicklung (14.2) angeordnet sind.

6. Spannungswandler nach einem der vorhergehenden Ansprüche, **dadurch gekennzeichnet, dass** jeweils ein zweiter Hauptanschluss der ersten Halbleiterschalter (31, 32) mit dem ersten beziehungsweise zweiten Ende der Sekundärwicklung (14.2) verbunden ist.

7. Spannungswandler nach einem der vorhergehenden Ansprüche, **dadurch gekennzeichnet, dass** der Steueranschluss der zweiten Halbleiterschalter (42, 45) jeweils mit einem Ende der Sekundärwicklung (14.2) verbunden ist.

8. Spannungswandler nach einem der Ansprüche 1 bis 6, **dadurch gekennzeichnet, dass** der Steueranschluss der zweiten Halbleiterschalter (42, 45) jeweils mit einem Pulsgenerator (96) verbunden ist.

9. Spannungswandler nach einem der vorhergehenden Ansprüche, **dadurch gekennzeichnet, dass** die Primärwicklung (15.1) des Steuertransformators (15) und die Primärwicklung (14.1) des Lasttransformators (14) in der Brückendiagonale (55) in Reihe geschaltet sind.

10. Spannungswandler nach einem der Ansprüche 1 bis 8, **dadurch gekennzeichnet, dass** an der Primärwicklung (15.1) des Steuertransformators (15) ein Impulsgenerator (97) angeschlossen ist, der Rechteckpulse erzeugt.

11. Spannungswandler nach einem der vorhergehenden Ansprüche, **dadurch gekennzeichnet, dass** der Steuertransformator (15) eine weitere Sekundärwicklung (15.4), und der Lasttransformator (14) eine zweite Sekundärwicklung (14.3) aufweist, die in einem Rückkopplungskreis (94) seriell miteinander verbunden sind.

12. Spannungswandler nach Anspruch 11, **dadurch gekennzeichnet, dass** im Rückkopplungskreis (94) ein Kondensator (59) in Serie zu den Sekundärwicklungen (15.4, 14.3) angeordnet ist.

13. Spannungswandler nach einem der vorhergehenden Ansprüche, **dadurch gekennzeichnet, dass** zwischen einem Ende der Sekundärwicklungen (15.2, 15.3), die mit den Steuereingängen der Halbleiterschalter (10, 11) verbunden sind, und den Steuereingängen der Halbleiterschalter (10, 11) jeweils ein Kondensator (37, 38) angeordnet ist.

14. Spannungswandler nach einem der vorhergehenden Ansprüche, **dadurch gekennzeichnet, dass** an einem der Wechselspannungseingänge (92, 93) des Spannungswandlers eine Dimmeinrichtung (90, 91) vorgesehen ist.
